# EUROPEAN PATENT APPLICATION

(11) **EP 2 256 648 A1**
(43) Date of publication of application: **01.12.2010**
(21) Application number: 09305474.0
(22) Date of filing: 25.05.2009
(51) Int. Cl.: G06F 17/30

(54) **Method for storing data files, method for reading data content, and data store**

(71) Applicant: Thomson Licensing SA, 92130 Issy-les-Moulineaux (FR)
(72) Inventor: Maas, Johann, 30753, Langenhagen (DE); Abeling, Stefan, 29690, Schwarmstedt (DE); Klausberger, Wolfgang, 30519, Hannover (DE); Kamphenkel, Oliver, 31275, Lehrte (DE)
(74) Representative: Thies, Stephan

(57) **Abstract**

A method and data store in which multiple file data units (38) are stored sequentially in a container file (34) in a file system (31). Subfile entries (40) are stored in a separate directory (36) of the file system (31). In one embodiment, the subfile entries (40) are associated with respective ones of contiguous, sequentially stored video frames (38), for example of a DPX take or shoot. Each subfile entry (40) includes data file access information and identification of the location in the sequence of stored video frames (38), of the video frames (38) with which that subfile entry (40) is associated. In another embodiment, the file data units comprise data content of bodies of emails, and the separately stored subfile entries include metadata associated with the email files.

## Description

### Field of the invention

This invention relates to storing data files. In particular, exemplary embodiments relate to storage of single-frame bit streams of a multi-frame video bit stream.

### Background of the invention

Japanese Patent Application Publication No. 2007179695 proposes that data to be recorded on a recording medium are managed as a first data file by first management information, and also when the first data file is managed further by a second management information, the recording control is carried out so that the second management information is updated in such a manner that the first data files are treated as one virtual data file under the management of the second management information whereby the plurality of first data files are formed as a series of stream data to be recorded with respect to the recording medium.

U.S. Patent No. 6,594,674 proposes a mechanism to allow an application program to write, as a single file, a large block of data comprising multiple portions that could otherwise be written as several smaller files, then to access, as individual files, each of the portions within the large block of data, and to be able to create individual files efficiently out of each of these subfiles. It is proposed that the mechanism may be partially embodied in a file system that includes an information store defining each file on a volume. The application program would write, via the file system, a single file to the volume as, preferably, a contiguous block of data. The single file would include two or more separable streams of data capable of being stored as individual files or subfiles. Once the single file is written to the volume, multiple entries would be made to the information store. Each entry would define and point to a subfile within the single file. The subfiles would be positioned within the single file such that the beginning of each subfile lies on the beginning of an allocation unit. It is asserted that in this manner, the single file may be written to the volume in one efficient operation, yet each subfile would be individually accessible via its respective entry in the information store.

In digital cinematography, audio/visual content, commonly referred to as AV content, e.g. uncompressed HDTV signals, may be recorded as a multi-frame video bit stream using the so-called DPX, i.e. Digital Picture Exchange, file format. According to the DPX format, each data unit containing a frame of AV data is stored as a separate file in a file system on a video data storage medium, e.g. a hard disc drive, commonly referred to as a HDD which may, for example, be included in an HDD array. This format is convenient in post production processing because each single frame of a take can be modified, enlarged or decreased in size without having to rewrite the whole take. However, a video sequence is typically streamed with at least 25 frames per second and consequently the total number of frames in a recording process can grow rapidly, e.g. resulting in generation of several thousand files for a five minute video shoot, each file starting with a new cluster address, a cluster being the smallest addressable allocation unit in the file system. A single frame usually comprises multiple clusters and if these clusters are allocated in a random manner, undesirable disc fragmentation may result. Another consequence is that the overall seek time may be a multiple of the number of seek operations necessary to address every single cluster of a frame.

Also, typically there may be limited cache capacity for storing metadata associated with the AV data files thereby inhibiting storage in memory of the metadata of all the data files of a video bit stream. This limitation may result in streaming of AV content of the data files being interrupted by requests for reading data file metadata from the storage medium. Desirably, servers intended to be capable of streaming DPX video data files should provide sufficient bandwidth to minimize or eliminate worst case delays. This issue, in principle, may be addressed by providing a high degree of bandwidth redundancy or very large capacity buffers in such servers but such features may be undesirable in embedded systems with limited bandwidth or memory resources.

Alleviation of fragmentation resulting from storage of numerous small data files would therefore be desirable.

### Invention

A method in accordance with the present invention is described in Claim 1. In an exemplary embodiment, the data units may be stored in a container file of a file system as a sequence of contiguous DPX formatted video data frames resulting from a DPX shoot or take. Subfile entries, including metadata associated with the data units may be stored in a separate directory in the file system, the metadata including video data file access information and identification of the location in the sequence of video data frames, of the data unit with which that subfile entry is associated. For editing purposes, the stored data units may be both read and write accessible but in one implementation only the final data unit in the sequence is both read and write accessible while all remaining data units are read-only accessible. Because the container file is a separate file in the file system, and the data units are stored in it contiguously, the data units may be collectively retrieved, in effect as a self-contained body of data. This may be an advantageous feature in certain applications. In an alternative embodiment, the data units may include, for example, data contained in the bodies of email files.

A data store in accordance with the present invention is set forth in Claim 11. In an exemplary embodiment of a data store for storing data units comprising video data frames, suitably in DPX format, of a DPX take or shoot, a storage medium includes a file system in which the data units of a sequence of video frames are stored in a contiguous sequence in a container file, and subfile entries including metadata associated with respective ones of the video frames are stored separately from the container file in a DPX directory of the file system. The subfile entries for the video data frames include identification of the location of that video data frame in the sequence of video data frames and access information relating to that video data frame.

Embodiments of the present invention are described, by way of example, with reference to the accompanying drawings. The embodiments to be described merely exemplify the invention. Possible modifications will be apparent to a person skilled in the art. The gist and scope of the present invention is set forth in the appended Claims of this application.

### Brief description of drawings

Fig. 1 is a block diagram of a video data recording system operable to implement an exemplary method embodying the present invention.
Fig. 2 depicts a file storage system organization by which an exemplary method embodying the invention may be implemented.

### Embodiments

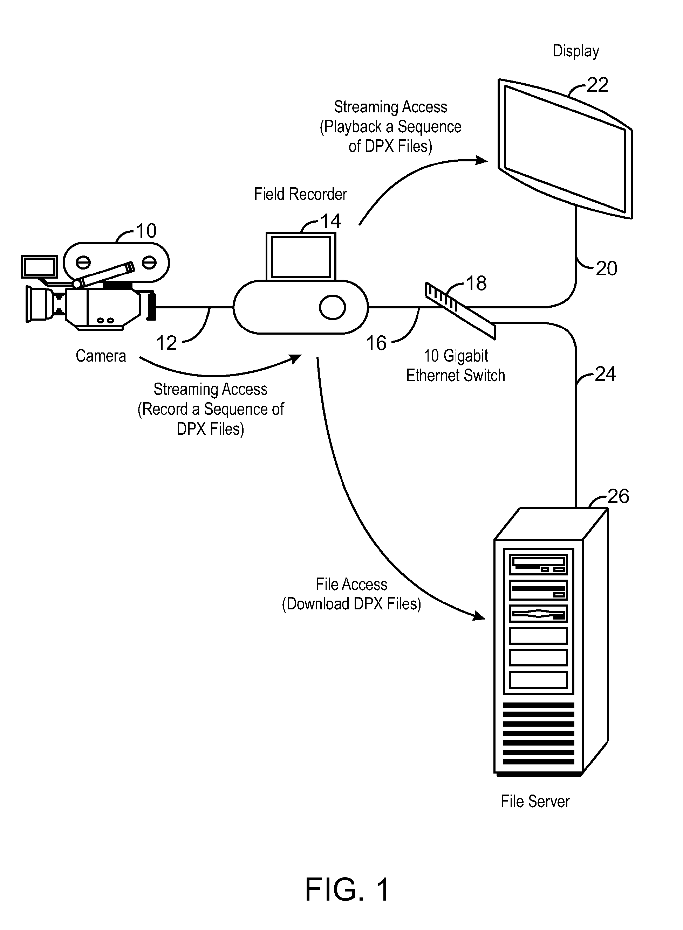

The video data recording system 100 depicted in Figure 1 includes a video camera 10 operable to convert image signals of an object or an object sequence directly to a digital output comprising a video bit stream. The video bit stream comprises a succession of video frames that are transferred over a communication link 12 to a video field recorder 14 for storage, e.g. on a HDD storage medium. In one embodiment, each video frame may be created in a DPX file format. Using the DPX file format, one data unit corresponding to one frame of uncompressed AV data, e.g. HDTV data, may be stored per data file.

Video output from the field recorder 14 is connected by a communication link 16, a network switch 18 and a communication link 20 to a video display 22 to permit playback from the field recorder of a streaming sequence of video files for display by the display 22. A video communication link 24 connects the network switch 18 to a file server 26 to permit downloading of video files from the field recorder 14 for storage on a HDD storage medium by the server 26 from which they may be output or accessed, e.g. for post production editing purposes.

In a particular implementation, the communication links 12, 16, 20 and 24 may be 10 Gigabit Ethernet links and the network switch 18 may be a 10 Gigabit Ethernet switch.

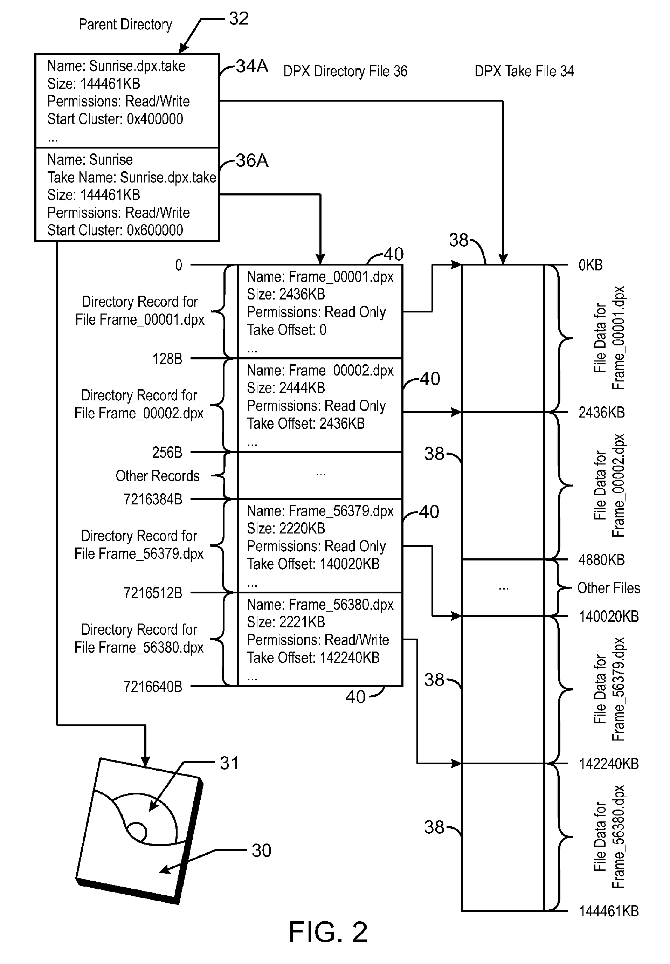

For storage of the video files, the field recorder 14 implements a file system 31 on its storage medium, e.g. on a HDD 30 depicted in Fig. 2, including a DPX take file 34 for storage of video frame data and a separate DPX directory 36 for storage of subfile entries associated with the data units 38 stored in the DPX take file 34. The file system 31 includes a parent directory 32 comprising a record 34A linked to the DPX take file 34 and a record 36A linked to the DPX directory 36.

Video editing tools typically expect to find conventional DPX files that contain both video data (file body) and metadata associated with particular video frames, in a directory in exactly the same order as they were recorded. As takes or shoots become longer, a sequence of DPX files in a conventional file system may become undesirably large, especially if, as is common, each new file starts with a new cluster. For each of the files, cluster alignment is performed, wasting partly empty space left over at the end of the previous file. Further, if the files are under a single directory, the available storage space may become fragmented due to random distribution of files throughout the available storage space. This can result in degraded performance on disc-based storage devices due to lengthy seek times due to repositioning of platter heads for every file access, causing significant idle time. Performance problems may then arise when video data stored in conventional DPX files are required to be streamed out in real-time and at a high data rate.

To alleviate problems associated with random cluster allocation discussed above, in an embodiment of the invention, all of the DPX formatted data units 38 of one take or shoot are stored by the field recorder 14 in a contiguous sequence in a single container file, the DPX take file 34. Associated with each recorded data unit 38, there is an individual subfile entry 40 containing metadata associated with the corresponding video data frame. The subfile entries 40 are set up in the separate DPX directory 36 under the parent directory 32, but no storage space is allocated in the DPX directory 36 for the video data content of the data units 38. Instead, the subfile entries 40 associated with each data unit 38 are extended to include an offset variable that specifies the offset within the DPX take file 34 at which data for the corresponding data unit begins. Using such an organization, each subfile entry 40 continues to exist and to be accessible within the parent directory 32 but does not include a file body of its own.

The DPX take file 34 may be created automatically by a correspondingly organized file system 31 such that when the first data unit 38, e.g. named "Frame_00001 .dpx", is copied into an empty directory, that directory is converted into a DPX directory 36, e.g. named "sunrise", by setting a flag variable in the directory's metadata, meaning that the files under that directory have to be accessed through specialized read/write functions. After converting the directory to the DPX directory 36, the DPX take file 34 is created by the file system 31, and the data unit 38 is copied into the DPX take file 34. Finally, a subfile entry 40 is created in the DPX directory 36 for each data unit, the file name being denoted by a "dpx" extension, and the record is linked with associated data within the DPX take file 34. Thus, referring to Fig. 2, the video frame data of the data unit 38 "Frame_00001.dpx" is associated with the subfile entry 40 for "File Frame_00001.dpx", etc. For example, the DPX take file 34 can be created under the parent directory 32, for example using the same directory name, e.g. "sunrise", as that of the DPX directory 36 but with an appended extension, e.g. "dpx.take". This organization may be represented for a shoot named "sunrise" as:

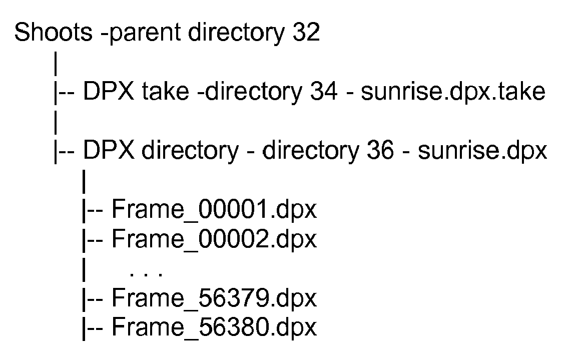

Each subfile entry 40 in the DPX directory 36 includes file identification name, file size, access permissions and a take offset variable specifying the start position in the DPX take file 34 of a data unit 38 containing the associated frame of video data. For example, the subfile entries for the first and last data units 38 may be:

```
                     Name: frame_00001.dpx
                    Size: 2436KB
                     Permissions: read only
                    Take offset: 0
 
                     Name: frame_56380.dpx
                    Size: 2221KB
                     Permissions: read only
                    Take offset: 142240KB
```

In order to enable reading or writing access to individual DPX files using this modified representation, the file system on the field recorder 14 provides two additional functions that redirect read/write requests to corresponding locations within the linked DPX take file 34. To carry out a read or write operation, access information is retrieved by the file system from the subfile entry 40 in the DPX directory 36 pertaining to the particular data unit 38 it is desired to access, on the basis of which the read or write request is redirected in accordance with the take offset information in the subfile entry 40, to the corresponding data unit 38.

Storing the video data frames, e.g. data units 38 of a video take in a single DPX take file 34, with the associated subfile entries 40 stored separately in the DPX directory 36 under the parent directory 32, allows a contiguous arrangement of the stored data units 38, thus eliminating the need for starting each single data unit at a new cluster. Instead, the data units "dock" seamlessly one to another, even those that end before the end of an allocation unit. This is possible because the data units are internally stored in a single file. If the file system supports the allocation of extents, the DPX take file, in turn, can be stored to a high degree sequentially, such that it becomes possible to achieve a very good recording or playback performance for all the data units contributing to the DPX shoot.

In the above described embodiment, only the last subfile entry 40 of a take includes both read and write permissions for accessing the last data unit 38; read only access is permitted to each of the preceding data units 38 because changing the size of one of the preceding data units via writing would necessitate the rewriting of an entire take or shoot. This may be implemented by assigning a read-only access permission in the subfile entries 40 associated with all data units 38 but the last one. A practical operational reason for this restriction is that changing the size of a data unit 38 stored in any position other than the final position may require rewriting of some or even all of the data units 38 of the complete take. This would impose an undesirable performance limitation for a DPX take file 34 comprising several gigabytes or more of video data frames. Similar restrictions also apply to deletion of data units 38; data unit deletion may be accomplished by removing all of the subfile entries 40 in the DPX directory 36 because it would be impractical to remove video frame data without having to rewrite parts or the whole of the modified DPX take file 34. The file system operation used to delete a specific DPX directory may automatically detect whether there is a DPX take file associated with it, e.g. using the directory name, and remove the take file as well. It should be noted that the data unit access restrictions just discussed are not essential but are of practical convenience in the context of lightweight field recorder, e.g. the field recorder 14, or storage devices used for transportation or streaming of a video take or shoot.

Most of the existing file systems can be adapted to work with DPX files in the proposed way. This requires modifications to the on-disc data structures and to the file access algorithms of a particular file system. The essential extensions to on-disc data structures are restricted to additional fields in DPX directories 36 (e.g. "name", "take name", "size", "permissions" and "start cluster") and in subfile entries 40 (e.g. "name", "size", "permissions" and "take offset") shown in Figure 2. The DPX directory 36 is modified to incorporate a flag variable indicating that the directory is a DPX directory (not shown in Figure 2), and a link to the DPX take file 34 associated with it (e.g. just a string variable containing the take name). The subfile entries 40 in the DPX directory 36 also provide a flag variable indicating the file as a DPX file and additionally provide an offset pointer that determines the file data offset within the container file 34 associated with the DPX directory 36.

In relation to the above described embodiment of the invention, modifications to file access algorithms required to operate the file system at runtime mainly affect the functions for creating, reading, writing and deleting data units 38 in the DPX take file 34. The operation for creating a modified DPX file is mostly the same as creating a regular file. The two major extensions involve sealing the previous subfile entry 40 in the DPX directory 36 by removing the write permission in that subfile entry 40 and setting a new take offset in the metadata for the created subfile entry 40 which is the sum of the take offset + length of the previous subfile entry 40 in the DPX directory 36. On the other hand, other than in a conventional DPX file, the function for creating a modified DPX file should omit the allocation of storage space for the associated data units to the subfile entry 40.

The functions that perform read and write operations on a DPX take file 34 must redirect the IO requests by adding the offset in the request to the offset of the data unit 38 within the container file 34 and by calling the read/write functions for the data unit 38 (which is a regular file) with the modified parameters. As stated above, only the last subfile entry 40 in the DPX directory 36 should include write permission to its associated data unit 38 while all other subfile entries 40 should be marked read-only.

Similar to excluding write access permissions to all but last subfile entries in the DPX directory, the file system should effectively prevent deletion of all write protected subfile entries. This makes sense because deleting a subfile entry somewhere in the middle of the directory could result in rewriting or condensing of major parts or even the whole DPX take file that contains the video data frames for the subfile entry to be deleted. Therefore, only the last subfile entry in the DPX directory should allow removal of the associated data unit 38, all others should be protected from deletion. To remove the subfile entries, the whole DPX directory should be deleted. The function for deleting a DPX directory also can automatically remove the DPX take file associated with it.

It also is to be appreciated that because the data units 38 are stored in contiguous sequence in the container file 34, the data units may be read collectively, in effect retrieved as a self-contained, single body of data. This may be an advantageous feature in certain applications.

In another implementation of the invention, a method embodying the present invention may be applied to storage of emails, whereby each data unit corresponds to an email body, and multiple email bodies may be stored in a contiguous sequence in a single file in conjunction with a separate directory storing metadata associated with the email bodies. This arrangement may be thought of as corresponding to the data units 38 in the container file 34 with the associated subfile entries 40, including the metadata for the email files, stored in a directory corresponding to the DPX directory 36. Both read and write access to the email data bodies 38 may be permitted as desired. Email storage systems are but one alternative example of systems that are able to benefit from the present invention because email systems typically store a large number of emails as relatively small data files.

The skilled person will appreciate that combining any of the above-recited features of the present invention together may be desirable.

## Claims

1. A method for storing data files, comprising:
- storing multiple data units (38) sequentially in a container file (34) of a file system (31); and
- generating and storing in a directory (36) of the file system (31), subfile entries (40) associated with respective ones of the sequentially stored data units (38), each subfile entry (40) including data file access information and identification of the location in the sequence of data units (38), of the data unit with which that subfile entry (40) is associated.

2. A method according to Claim 1, wherein the data units (38) comprise a sequence of contiguous single-frame bit streams.

3. A method according to Claim 1, wherein the data units (38) are bodies of email data files.

4. A method according to Claim 2, wherein the single-frame bit streams constitute a multi-frame video bit stream.

5. A method according to Claim 4, wherein the multi-frame video bit stream comprises frames of a Digital Picture Exchange take or shoot.

6. A method according to any of Claims 1, 2, 3 and 4, wherein the data units are read accessible.

7. A method according to any of Claims 1, 2, 3 and 4, wherein the data units are write accessible.

8. A method according to Claim 4, wherein all the sequentially stored data units (38) are read accessible and only the final data unit (38) is write accessible.

9. A method for reading a data unit (38) from a container file (34) stored in accordance with any of Claims 1, 2, 3, and 4, the method comprising:
- retrieving the subfile entry (40) associated with the data unit (38); and
- reading the data unit (38) from the container file (34) at the location identified by the retrieved metadata (40).

10. A method for reading all data units (38) from a container file (34) stored in accordance with any of Claims 1, 2, 3, and 4, the method comprising:
- retrieving a link to the container file (34) containing the data units (38); and
- reading all of the sequence of data units from the container file (34) thereby retrieving the contents of the sequentially stored data units (38) as a single body of data.

11. A data store, comprising:
- a storage medium (30) including a file system (31);
- multiple data units (38) sequentially stored in a container file (34) in the file system (31);
- subfile entries (40) associated with respective ones of the data units (38) stored separately from the container file (34) in a directory (36) of the file system (31); and
- wherein the subfile entries (40) for each data unit (38) include identification of the location of that data unit (38) in the sequence of data units and access information relating to that data unit (38).

12. A data store according to Claim 11, wherein the data units (38) comprise a sequence of contiguous video frames in a multi-frame video bit stream.

13. A data store according to Claim 12, wherein the video frames have a Digital Picture Exchange format.
